# EUROPEAN PATENT APPLICATION

(11) **EP 4 465 640 A1**
(43) Date of publication of application: **20.11.2024**
(21) Application number: 23866597.0
(22) Date of filing: 06.12.2023
(51) Int. Cl.: H04N 21/44

(54) **METHOD AND APPARATUS FOR MULTIMEDIA RESOURCE PROCESSING, DEVICE, MEDIUM, AND PROGRAM PRODUCT**

(30) Priority: 04.04.2023 CN 202310355910
(71) Applicant: Beijing Zitiao Network Technology Co., Ltd., Beijing 100190 (CN)
(72) Inventor: JIA, Song, Beijing 100028 (CN); LI, Wei, Beijing 100028 (CN)
(74) Representative: Dentons UK and Middle East LLP
(86) International application number: PCT/CN2023/136869
(87) International publication number: WO 2024/207771

(57) **Abstract**

The disclosure relates to a method, apparatus, device, storage media, and a program product for processing multimedia resources, devices. The method includes: obtaining a first multimedia data; wherein the first multimedia data includes a first multimedia material and a second multimedia material; in response to a setting operation for an editing template, generating editing template data by processing the first multimedia data; the editing template data is used to generate second multimedia data based on the third multimedia material; the second multimedia data includes a third multimedia material, a second multimedia material, and second edit information; wherein the third multimedia material is used to replace the first multimedia material; the second edit information is used to indicate a third editing track segment formed based on the third multimedia material and a fourth editing track segment formed based on the second multimedia material according to a target display position. Embodiments of the present disclosure set the display effect of the second multimedia material, which improves the universality of the template.

## Description

This application claims priority to Chinese Patent Application No. 202310355910.0 filed on April 4, 2023, entitled "Method, apparatus, device, media and program product for processing multimedia resource", which is hereby incorporated by reference in its entirety.

### FIELD

The present disclosure relates to the field of computer processing, and more particularly to a method, apparatus, device, storage media and program product for processing multimedia resource.

### BACKGROUND

With the continuous development of computer technology, video clip technology is evolving constantly. Currently, a common video clip technology involves using a clip template already published on a video clip platform, and directly applying the clip template to the main video uploaded by the user to obtain a target video for interaction between the material in the clip template and a theme video uploaded by the user.

However, the material elements in the clip template are customized according to an original video content of the clip template during creation, and the main content of the video uploaded by the user is difficult to maintain consistency with the original template, resulting in a mismatch in effect and greatly reducing versatility of the clip template.

### SUMMARY

In order to solve the above problems, embodiments of the present disclosure provides a method, apparatus, device, storage media and program product for processing multimedia resource, add intelligent effect settings to materials in a clip template to enhance the versatility of the template.

In a first aspect, embodiments of the present disclosure provide a method for processing multimedia resource, comprising:
obtaining a first multimedia data; wherein the first multimedia data comprises a first multimedia material, a second multimedia material, and first edit information; the first edit information is at least used to indicate a first editing track segment formed based on the first multimedia material and a second editing track segment formed based on the second multimedia material according to an initial display position, and the first editing track segment overlaps with the second editing track segment in positions on a timeline of the video editing track;
in response to a setting operation for an editing template, generating editing template data by processing the first multimedia data;
wherein the setting operation at least comprises a first operation and a second operation;
the first operation is used for indicating that the first multimedia material is set as a replaceable material;
the second operation is used for indicating that a display position of the second multimedia material is set to be determined based on an identified position of the target object;
the editing template data is used to generate second multimedia data based on a third multimedia material; wherein the third multimedia material is used to replace the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to a target display position, the target display position is determined based on the identified position of the target object in the third multimedia material, the third editing track segment corresponds to the first editing track segment, and the fourth editing track segment corresponds to the second editing track segment.

In a second aspect, embodiments of the present disclosure provide a method for processing multimedia resource, comprising:
obtaining editing template data; wherein the editing template data is generated by processing the first multimedia data in response to a setting operation for the editing template; the first multimedia data comprises first multimedia material, second multimedia material, and first edit information; the first edit information is at least used to indicate a first editing track segment formed based on the first multimedia material and a second editing track segment formed based on the second multimedia material according to an initial display position, the first editing track segment and the second editing track segment overlap in positions on a timeline of the video editing track; the setting operation at least comprises a first operation and a second operation; the first operation is used for indicating that the first multimedia material is set as a replaceable material; the second operation is used for indicating that a display position of the second multimedia material is set to be determined based on an identified position of the target object; and
in response to an import operation for a third multimedia material, generating second multimedia data based on the third multimedia material and the editing template data;
wherein the third multimedia material is used for replacing the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to the target display position, the target display position is determined based on the identified position of the target object in the third multimedia material, the third editing track segment corresponds to the first editing track segment, and the fourth editing track segment corresponds to the second editing track segment.

In a third aspect, embodiments of the present disclosure provide an apparatus for processing multimedia resource, comprising:
a first multimedia data obtaining module configured for obtaining a first multimedia data; wherein the first multimedia data comprises a first multimedia material, a second multimedia material, and first edit information; the first edit information is at least used to indicate a first editing track segment formed based on the first multimedia material and a second editing track segment formed based on the second multimedia material according to an initial display position, and the first editing track segment overlaps with the second editing track segment in positions on a timeline of the video editing track; and
an editing template data generating module configured for in response to a setting operation for an editing template, generating editing template data by processing the first multimedia data;
wherein the setting operation at least comprises a first operation and a second operation;
the first operation is used for indicating that the first multimedia material is set as a replaceable material;
the second operation is used for indicating that a display position of the second multimedia material is set to be determined based on an identified position of the target object;
the editing template data is used to generate second multimedia data based on a third multimedia material; wherein the third multimedia material is used to replace the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to a target display position, the target display position is determined based on the identified position of the target object in the third multimedia material, the third editing track segment corresponds to the first editing track segment, and the fourth editing track segment corresponds to the second editing track segment.

In a fourth aspect, embodiments of the present disclosure provide an apparatus for processing multimedia resource, comprising:
an editing template data obtaining module configured for obtaining editing template data; wherein the editing template data is generated by processing the first multimedia data in response to a setting operation for the editing template; the first multimedia data comprises first multimedia material, second multimedia material, and first edit information; the first edit information is at least used to indicate a first editing track segment formed based on the first multimedia material and a second editing track segment formed based on the second multimedia material according to an initial display position, the first editing track segment and the second editing track segment overlap in positions on a timeline of the video editing track; the setting operation at least comprises a first operation and a second operation; the first operation is used for indicating that the first multimedia material is set as a replaceable material; the second operation is used for indicating that a display position of the second multimedia material is set to be determined based on an identified position of the target object; and
a second multimedia data generating module configured for in response to an import operation for a third multimedia material, generating second multimedia data based on the third multimedia material and the editing template data;
wherein the third multimedia material is used for replacing the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to the target display position, the target display position is determined based on the identified position of the target object in the third multimedia material, the third editing track segment corresponds to the first editing track segment, and the fourth editing track segment corresponds to the second editing track segment.

In a fifth aspect, embodiments of the present disclosure provide an electronic device, the electronic device comprising:
one or more processors; and
a storage device for storing one or more programs;
the one or more programs, when executed by the one or more processors, causing the one or more processors to implement a method for processing multimedia resource as described in the first aspect or the second aspect.

In a sixth aspect, embodiments of the present disclosure provides a computer-readable storage medium having a computer program stored thereon, the program, when executed by a processor, implementing a method for processing multimedia resource as described in the first aspect or the second aspect.

In a seventh aspect, embodiments of the present disclosure provides a computer program product, the computer program product comprising a computer program or instructions, the computer program or instructions, when executed by a processor, implementing a method for processing multimedia resource as described in the first aspect or the second aspect.

The present disclosure provides a method, apparatus, device, storage media and program product for processing multimedia resource. The method comprises: obtaining a first multimedia data; wherein the first multimedia data comprises a first multimedia material, a second multimedia material, and first edit information; the first edit information is at least used to indicate a first editing track segment formed based on the first multimedia material and a second editing track segment formed based on the second multimedia material according to an initial display position, and the first editing track segment overlaps with the second editing track segment in positions on a timeline of the video editing track; in response to a setting operation for an editing template, generating editing template data by processing the first multimedia data; and wherein the setting operation at least comprises a first operation and a second operation; the first operation is used for indicating that the first multimedia material is set as a replaceable material; the second operation is used for indicating that a display position of the second multimedia material is set to be determined based on an identified position of the target object; the editing template data is used to generate second multimedia data based on a third multimedia material; wherein the third multimedia material is used to replace the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to a target display position, the target display position is determined based on the identified position of the target object in the third multimedia material, the third editing track segment corresponds to the first editing track segment, and the fourth editing track segment corresponds to the second editing track segment. Embodiments of the present disclosure adjust the first multimedia data in response to a setting operation of the editing template, and set a display effect for the second multimedia material in the first multimedia data, which adds an intelligent effect settings for the materials in the editing template and enhances the versatility of the template.

### BRIEF DESCRIPTION OF THE DRAWINGS

In conjunction with the accompanying drawings and with reference to the following detailed description, the above and other features, advantages and aspects of the various embodiments of the present disclosure will become more apparent. Throughout the drawings, similar or same reference numerals denote similar or same elements. It should be understood that the drawings are illustrative and that the elements are not necessarily drawn to scale.
FIG. 1 shows an architecture diagram of a scenario of video making provided in embodiments of the present disclosure;
FIG. 2 is a flow chart diagram of a method for processing multimedia resource provided in embodiments of the present disclosure;
FIG. 3a is a schematic diagram of replacement settings of multimedia materials provided in embodiments of the present disclosure;
FIG. 3b is a schematic diagram of selection of a second multimedia material provided in embodiments of the present disclosure;
FIG. 4 is a schematic diagram of selection of a setting mode of a display effect provided in embodiments of the present disclosure;
FIG. 5 is a schematic diagram of a selection of the second target object provided in embodiments of the present disclosure;
FIG. 6a is a schematic diagram of a selection of the target key frame provided in embodiments of the present disclosure;
FIG. 6b is a schematic diagram of a selection of the first target object provided in embodiments of the present disclosure;
FIG. 7a is a schematic diagram for displaying a trajectory in the case of a single target key frame provided in embodiments of the present disclosure;
FIG. 7b is a schematic diagram for displaying a trajectory in the case of multiple target key frames provided in embodiments of the present disclosure;
FIG. 8 is a schematic diagram of a method for processing multimedia resource provided in embodiments of the present disclosure;
FIG. 9 is a schematic diagram of a structure of an apparatus for processing multimedia resource provided in embodiments of the present disclosure;
FIG. 10 is a schematic diagram of a structure of an apparatus for processing multimedia resource provided in embodiments of the present disclosure; and
FIG. 11 is a schematic diagram of the structure of an electronic device provided in embodiments of the present disclosure.

### DETAILED DESCRIPTION

The following will describe embodiments of the present disclosure in more detail with reference to the accompanying drawings. Although certain embodiments of the present disclosure are displayed in the drawings, it should be understood that the present disclosure may be implemented in various forms and should not be construed as limited to the embodiments set forth herein. On the contrary, these embodiments are provided for a more thorough and complete understanding of the present disclosure. It should be understood that the accompanying drawings and embodiments of the present disclosure are for illustrative purposes only and are not intended to limit the scope of protection of the present disclosure.

It should be understood that the various steps described in the method implementation of the present disclosure may be executed in different orders and/or in parallel. In addition, the method implementation may include additional steps and/or omit the steps shown. The scope of the present disclosure is not limited in this regard.

The term "including" and its variations used here are not exclusive, which means "including but not limited to". The term "based on" means "at least partially based on". The term "one embodiment" means "at least one embodiment"; the term "a further embodiment" means "at least one further embodiment"; the term "some embodiments" means "at least some embodiments". Relevant definitions of other terms will be given in the following description.

It should be noted that the concepts of "first" and "second" mentioned in this disclosure are only used to distinguish different devices, modules, or units, and are not used to limit the order or interdependence of the functions performed by these devices, modules, or units.

It should be noted that the modifications of "one" and "multiple" mentioned in this disclosure are illustrative and not restrictive. Those skilled in the art should understand that unless otherwise specified in the context, they should be understood as "one or more".

The names of messages or information exchanged between multiple devices in the present disclosure are for illustrative purposes only and are not intended to limit the scope of these messages or information.

Before the embodiments of the present disclosure will be described in further detail, the nouns and terms involved in the embodiments of the present disclosure will be described, and the nouns and terms involved in the embodiments of the present disclosure are applicable to the following explanation.

In response to the conditions or states on which the operations performed depend, when the dependent conditions or states are satisfied, one or more operations may be performed in real time or may have a preset delay; in the absence of special descriptions, there is no restriction on the execution order of multiple operations performed.

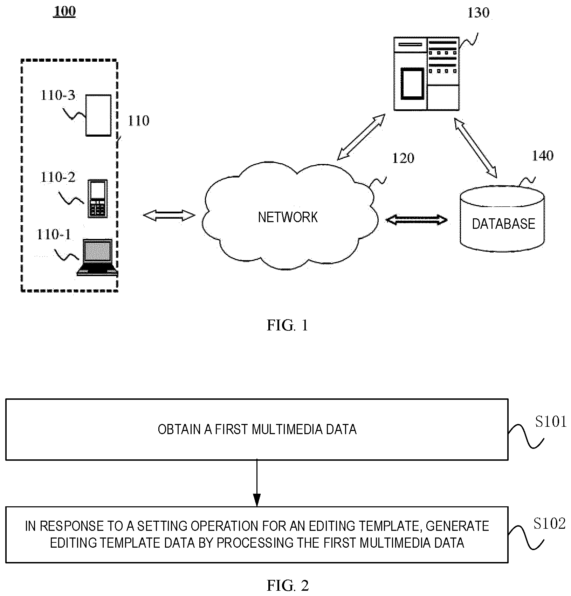

As shown in FIG. 1, the system 100 may include a plurality of user terminals 110, a network 120, a server 130, and a database 140. As shown in FIG. 1, the system 100 may comprise a plurality of user terminals 110, a network 120, a server 130 and a database 140. For example, the system 100 may be used to implement the information delivery method according to any embodiment of the present disclosure.

It is to be understood that the user terminal 110 may be of any other type of electronic device capable of performing data processing, which may include, but are not limited to: mobile phones, sites, units, devices, multimedia computers, multimedia tablets, Internet nodes, communicators, desktop computers, laptop computers, notebook computers, netbook computers, tablet computers, personal communication system (PCS) devices, personal navigation devices, personal digital assistants (PDA), audio/Mobile Pentium 4, digital cameras/camcorders, positioning devices, television receivers, radio broadcast receivers, e-book devices, gaming devices, or any combination thereof, including accessories and peripherals of these devices, or any combination thereof.

The user may operate through an application installed on the user terminal 110, the application 120 transmits data of user behavior to the server 130 via the network, the user terminal 110 may also receive data from the server 130 via the network 120. The embodiments of the present disclosure are not limited to the hardware system and the software system of the user terminal 110, for example, the user terminal 110 may be based on processors such as ARM, X86, may have input/output devices such as cameras, touch screens, microphones, etc., and may run operating systems such as Windows, iOS, Linux, Android, and Harmony OS.

The user terminal 110 may implement the method for processing media resource provided by embodiments of the present disclosure by running a process or thread. In some examples, the user terminal 110 may utilize its built-in application to perform the information delivery method, in other examples, user terminal 110 may perform the method for processing media resource by calling an application stored outside of the user terminal 110.

The network 120 may be a single network or a combination of at least two different networks. For example, the network 120 may include but is not limited to a combination of one or more of local area networks, wide area networks, public networks, private networks, etc. The network 120 may be a computer network such as the Internet and/or various telecommunications networks (such as 3G/4G/5G mobile communication networks, WIFI, Bluetooth, ZigBee, etc.). Embodiments of the present disclosure are not limited thereto.

The server 130 may be a single server, or a group of servers, or a cloud server, and the servers in the server group are connected through a wired or wireless network. A server group may be centralized, such as a data center, or distributed. The server 130 may be local or remote. The server 130 may communicate with the user terminal 110 through a wired or wireless network. The embodiments of the present disclosure are not limited to the hardware system and the software system of the server 130.

The database 140 may refer to a device with storage function. The database 140 is mainly used to store various data used, generated, and output by user terminals 110 and the server 130 in operation. The database 140 may be local or remote. The database 140 may include various memories, such as random access memory (RAM), read-only memory (ROM), etc. The storage devices mentioned above are just some examples, and the storage devices that the system 100 may use are not limited thereto. Embodiments of the present disclosure are not limited to the hardware and software systems of the database 140, such as a relational database or a non relational database.

The database 140 may be interconnected or communicated with the server 130 or a portion thereof via the network 120, or directly interconnected or communicated with the server 130, or a combination of the above two ways.

In other examples, the database 140 may also be integrated in at least one of the user terminal 110 and the server 130. For example, the database 140 may locate on the user terminal 110 or on the server 130. For another example, the database 140 may also be distributed, with one part of it locating on the user terminal 110 and the other part locating on the server 130.

The following will be in conjunction with the accompanying drawings, the method for processing multimedia resources provide in embodiments of the present application will be described in detail.

FIG. 2 is a flow chart diagram of a method for processing multimedia resource provided in embodiments of the present disclosure. The present embodiment is applicable to the case of generating a video clip template, the method may be performed by an apparatus for processing multimedia resources. The apparatus for processing multimedia resources may be implemented by employing software and/or hardware. The apparatus for processing multimedia resources may be implemented at an electronic device as shown in FIG. 1.

As shown in FIG. 2, embodiments of the present disclosure provides a method for processing multimedia resources comprising steps S101-S102.

S101, obtaining a first multimedia data; wherein the first multimedia data comprises a first multimedia material, a second multimedia material, and first edit information; the first edit information is at least used to indicate a first editing track segment formed based on the first multimedia material and a second editing track segment formed based on the second multimedia material according to an initial display position, and the first editing track segment overlaps with the second editing track segment in positions on a timeline of the video editing track.

In embodiments of the present disclosure, the first multimedia data may be understood as a video clip template draft generated by manual clipping in a multi-track clipper. The first multimedia data may be a template draft released by a platform or a template draft generated by the template creator through manual clipping in a multi-track clipper.

The first multimedia data includes the first multimedia material, the second multimedia material and the first edit information. The first multimedia material may be understood as the background material included in the first multimedia data. In a possible embodiment of the present disclosure, the first multimedia material is the background video. The edit track where the first multimedia material is located is the first edit track.

In one embodiment of the present disclosure, the second multimedia material includes stickers, picture-in-picture and other materials, and the edit track where the second multimedia material is located is the second edit track. The first multimedia data includes one or more second multimedia materials, for example, multiple stickers added to the background video. Furthermore, one second multimedia material corresponds to one second edit track. There are a plurality of second edit tracks in the case that a plurality of second multimedia materials are included in the first multimedia data.

In one embodiment of the present disclosure, the first edit information refers to the manual clipping operation in the multi-track clipper. Specifically, the first edit information is used to indicate at least the first editing track segment formed based on the first multimedia material and the second editing track segment formed based on the second multimedia material at the initial display position. Furthermore, the first edit information may also include the variable speed, color adjustment, special effects, display position, display trajectory, and so on of the multimedia material. Among them, the initial display position indicates the position where the second multimedia material first appears in the first multimedia material. Furthermore, the start time of the second editing track segment corresponding to the second multimedia material is determined based on a time node corresponding to the initial display position in the first editing track segment.

In one embodiment of the present disclosure, the first editing track segment overlaps with the second editing track segment in the timeline position of the video editing track. Specifically, the timeline of the second editing track segment in the video editing track is less than the timeline of the first editing track segment in the video editing track. Furthermore, the timeline of the second editing track segment in the video editing track is a part of the timeline of the first editing track segment in the video editing track.

S102, in response to a setting operation for an editing template, generating editing template data by processing the first multimedia data.

In embodiments of the present disclosure, the setting operation of the editing template may be understood as an operation for setting the first edit information included in the first multimedia data. The setting operation in the editing template may adjust the first multimedia material in the first multimedia data, or set the display effect of the second multimedia material (sticker, picture-in-picture) added into the first multimedia data. The editing template data refers to the editing template data obtained by the user after adjusting the first edit information in the first multimedia data. The setting operation includes at least a first operation and a second operation.

In one embodiment of the present disclosure, the first operation is used to indicate that the first multimedia material is set as a replaceable material. The replaceable material may be understood as adding a new multimedia material after deleting the first multimedia material during the user's use of editing template data.

In one application scenario of the present disclosure, after deleting the first multimedia material (background video) included in the editing template data, a new multimedia material may be added as a new background video.

In one embodiment of the present disclosure, the editing template data is used to generate second multimedia data based on a third multimedia material; wherein the third multimedia material is used to replace the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to a target display position, the target display position is determined based on the identified position of the target object in the third multimedia material, the third editing track segment corresponds to the first editing track segment, and the fourth editing track segment corresponds to the second editing track segment.

The third multimedia material refers to the multimedia material imported by the user for video clipping, and the second multimedia data is multimedia data generated based on the third multimedia material and editing template data.

In one embodiment of the present disclosure, the display position of the second multimedia material in the video screen corresponding to the third multimedia material is determined by the target object in the third multimedia material. The determination of the target is indicated by the second operation.

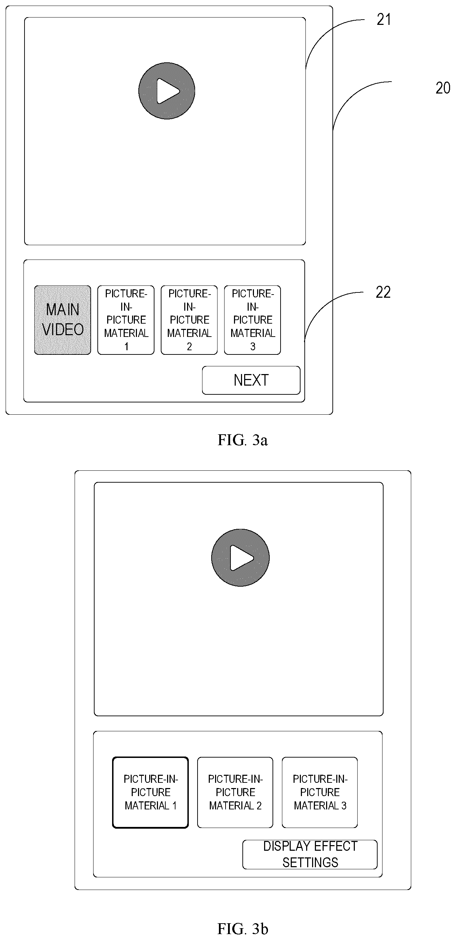

In embodiments of the present disclosure, after the template creator manually clips the template draft in the multi-track editor, the template editing control is displayed in the template creation completion page, and the template editing page is displayed in response to the trigger operation for the template editing control. As shown in FIG. 3a, the template editing page 20 includes a screen display region 21 and a material selection region 22. Among them, the screen display region 21 is used to display the video screen corresponding to the first multimedia material. The material selection region 22 is used to display all multimedia materials included in the first multimedia data, as shown in FIG. 2, which may include background video, Picture-in-Picture Material 1, Picture-in-Picture Material 2, and Picture-in-Picture Material 3.

In embodiments of the present disclosure, in response to the user's selection operation for the material selection region 22, the material corresponding to the selection operation is determined as the material whose effect is to be set in the editing. In response to the user's deletion operation for the material selection region 22, the second multimedia material corresponding to the deletion operation is deleted from the first multimedia data.

In embodiments of the present disclosure, in response to a selection operation for the second multimedia material (Picture-in-Picture Material 1, Picture-in-Picture Material 2, Picture-in-Picture Material 3) in the material selection region 22 by the template creator, the Picture-in-Picture Material 1, Picture-in-Picture Material 2, Picture-in-Picture Material 3 are determined as the second multimedia materials whose effects need to be set for the template editing.

It should be noted that the material selection region 22 constantly displays an entrance of "display effect settings". This entrance is displayed regardless of whether the replaceable Picture-in-Picture Material segment or sticker segment is selected. The page of display effect settings is entered by clicking on the entrance. Furthermore, for users who have never clicked "display effect settings" to enter, a yellow dot may be displayed in the upper right corner of the entrance of "display effect settings". After the entrance is clicked, the yellow dot disappears.

In the embodiments of the present disclosure, it is possible to determine which multimedia materials whose effects may be set, which multimedia materials may be replaced, and which multimedia materials whose effects are not set based on choices of the template creator. For example, in the embodiments of the present disclosure, the main video may be replaced. Effects of Picture-in-Picture Material 1, Picture-in-Picture Material 2, and Picture-in-Picture Material 3 may be set. Picture-in-Picture Materials that are not selected in the material selection region 22 cannot set effects.

In one embodiment of the present disclosure, in response to the selection operation for the material is completed, at least one or more second multimedia material (shown in FIG. 3b, Picture-in-Picture Material 1, Picture-in-Picture Material 2, Picture-in-Picture Material 3) selected to set the effects are displayed in the material selection region 22.

In one embodiment of the present disclosure, the second operation is used for indicating that a display position of the second multimedia material is set to be determined based on an identified position of the target object. The second operation is used to indicate that the display effect set for the second multimedia material in the first multimedia data is adjusted so that the display effect of the second multimedia material in the editing template data is set to be determined based on the identified position of the target object.

In embodiments of the present disclosure, the second operation includes a second multimedia material selection operation and a display track adjustment operation. The second multimedia material selection operation is used for indicating a target second multimedia material whose display track needs to be adjusted from a plurality of second multimedia materials. The display track adjustment operation is used for indicating adjustment of the display track of the second target multimedia material.

As shown in FIG. 3b, the effects of Picture-in-Picture Material 1, Picture-in-Picture Material 2, and Picture-in-Picture Material 3 that need to be set are displayed in the template edit page. The second multimedia material selection operation is used to select the second multimedia material whose effect is to be set currently. For example, in response to the selection operation for Picture-in-Picture Material 1, the Picture-in-Picture Material 1 is determined as the target second multimedia material for which the display trajectory needs to be adjusted. Then, for Picture-in-Picture Material 1, the display trajectory adjustment operation is performed to adjust the display effect of Picture-in-Picture Material 1.

As shown in FIG. 3b, all picture-in-picture material segments are tiled and displayed in the material selection region 22, and the prompt text "Intelligent effects may be added to the following materials" is displayed. By default, the first picture-in-picture material is selected as the picture-in-picture material with the effect to be set.

In one embodiment of the present disclosure, specifically, the second operation indicates that a first mode is selected for processing the second media material. The first mode refers to performing a key frame animation processing on the second multimedia material.

In one embodiment of the present disclosure, specifically, the second operation indicates that a second mode is selected for processing the second media material. The second mode refers to setting a display position of the second media material to be an identified position of a target object in the third media material.

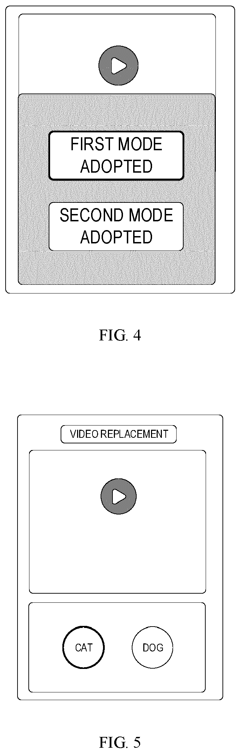

In the embodiments of the present disclosure, as shown in FIG. 3b, after selecting the Picture-in-Picture Material 1 that needs to adjust the display effect, in response to the trigger operation for a display effect setting control, two selectable setting modes for the display effect are displayed (as shown in FIG. 4). Furthermore, in response to the trigger operation for the display effect setting control, an intelligent effect selection panel is pulled up from bottom to top, and the intelligent effect selection panel includes two selectable setting modes for the display effect. The intelligent effect selection panel also includes a prompt text and a close control. The prompt text is "select an intelligent effect for the current material". The close control is used to close the current panel in response to user's operation.

In response to a selection operation for the first mode, the key frame material editing page is displayed. In the key frame material editing page, the display effect set for the second multimedia material in the first multimedia data is adjusted by means of performing keyframe animation processing on the second multimedia material.

A panel corresponding to the first mode also includes a prompt text "Applicable to a material with added a key frame, set a motion path of the key frame", and the logic for displaying it is: if there is no key frame in the second multimedia material currently set, the setting panel will not be displayed; and if there is a key frame in the second multimedia material which is currently set, the setting panel will be displayed.

In response to the selection operation for the second embodiment, a material following editing page is displayed. In the material following editing page, the display position of the second multimedia material in the third multimedia material is set to the identified position of the target object in the third multimedia material.

The panel corresponding to the second mode also includes a prompt text "Applicable to a material that needs to continuously track a material in the main body of the screen, set a tracking object", and the display logic is: regardless of whether the second multimedia material which is currently set has a key frame, a setting item is displayed.

In one embodiment of the present disclosure, details of adjustment of the display position of the second multimedia material in the second mode are provided below.

As shown in FIG. 5, the material following editing page includes a target object selection region 51, a plurality of objects may be selected in the material following the display editing page, for example: the cat in FIG. 5, the dog may be selected as the object.

In one embodiment of the present disclosure, the second operation is used for indicating that a display position of the second multimedia material is to be determined based on an identified position of the target object; and the target display position is the identified position of the target object in the third multimedia material.

In embodiments of the present disclosure, the template data for an intelligent tracking algorithm is set at the publishing side, and the algorithm needs to be applied to a picture-in-picture material and a video to which the intelligent effect has been set.

In embodiments of the present disclosure, the intelligent tracking algorithm identifies the target object in the third multimedia material, and the identified position of the target object is used as the display position of the second multimedia material in the third multimedia material.

In one embodiment of the present disclosure, in response to a selection operation for an initial object, the initial object corresponding to the selection operation is determined as a target object. Specifically, a plurality of initial objects may be displayed, such as "cat", "dog", "pig", and so on. In response to a user's selection operation for "cat", the "cat" is determined as a target object.

In one embodiment of the present disclosure, the position of the "cat" in the third multimedia material is identified, and the position of the "cat" is used as the display position of the second multimedia material. Specifically, taking "crown" as an example of the second multimedia material, the "crown" is displayed at the position where the "cat" is located in the third multimedia material. As the position of the "cat" in the third multimedia material continues to move, the "crown" continues to move along with the position of the "cat".

In embodiments of the present disclosure, in FIG. 5, in response to the setting operation for the second target object is completed, it is determined that the setting of the display effect of the second multimedia material is completed, and it goes to the template editing page shown in FIG. 3,where the next second multimedia material whose display effect needs to be set is selected.

In one embodiment of the present disclosure, it is introduced a way for setting the display effect for the second multimedia material in the first multimedia data using the first mode.

In one embodiment of the present disclosure, the second editing track segment is a segment formed by performing key frame animation processing on the second multimedia material based on the initial display position at the specified key frame; the second operation is used for indicating to set the display position of the second media material at the specified key frame to be determined based on the identified position of the target object; and the fourth editing track segment is a segment formed by performing key frame animation processing on the second multimedia material based on the target display position at a specified key frame.

The second editing track segment is a segment formed by performing key frame animation processing on the second multimedia material based on a first display position at a plurality of key frames, wherein the plurality of key frames comprise a specified key frame and a further key frame, and the first display position at the specified key frame is the initial display position.

In one embodiment of the present disclosure, the second operation is used for indicating that a target object is selected from a plurality of initial objects and a display position of the second media material in the specified key frame is set based on the identified position of the target object determined.

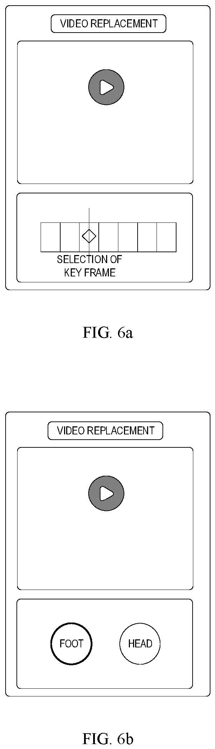

In embodiments of the present disclosure, as shown in FIG. 6a, the key frame material editing page includes a second edit track corresponding to the second multimedia material. In response to the selection operation for the second edit track, a specified key frame is selected from the second edit track. After selecting the specified key frame, a plurality of initial objects that may be selected are displayed in the key frame material editing page. For example, in FIG. 6, neither the "head" or the "foot" may be selected as an initial object. Furthermore, regarding the selection operation for the selected object, the selected initial object is determined as the target object, and the display position of the second multimedia material is set to the identified position of the target object. For example, if the second multimedia material is "football", and the target object is "foot", the display position of the second multimedia material "football" is set to the position where "foot" is located in the specified key frame.

Further, after the setting for the display position of the second multimedia material in the key frame is completed, it goes to the key frame selection page shown in FIG. 6a, where a new key frame is reselected as a specified key frame and a subsequent setting operation is performed.

In embodiments of the present disclosure, the key frame selection page displays the prompt text "Select a key frame in contact with the main body of the screen and set the position of the key frame ". When the specified key frame is selected with a timeline, the key frame needs to be highlighted and automatically adsorbed for vibration. The correspondence between the remaining track logic and the preview region is consistent with the clip project. When the specified key frame is not selected with a timeline, the button is in grey and is inactive in response to a click. After the button is released, it is automatically adsorbed to the nearest key frame and is selected. After the target key frame is selected, the position corresponding to the specified key frame in the screen is displayed.

In embodiments of the present disclosure, as shown in FIG. 6b, the panel setting indicates the position of the second multimedia material (e.g., foot) corresponding to the key frame in the screen. After the setting, the display position of the second multimedia material in the specified key frame is the position of the target object in the specified key frame.

In one embodiment of the present disclosure, the second operation is used to indicate that the specified key frame is selected from the plurality of key frames and the display position of the second media material at the specified key frame is set to be determined based on the identified position of the target object.

The fourth editing track segment is a segment formed by performing key frame animation processing on the second multimedia material based on a second display position at the plurality of key frames, wherein the second display position at the specified key frame is the target display position, and the second display position at the further key frame is the first display position at the further key frame.

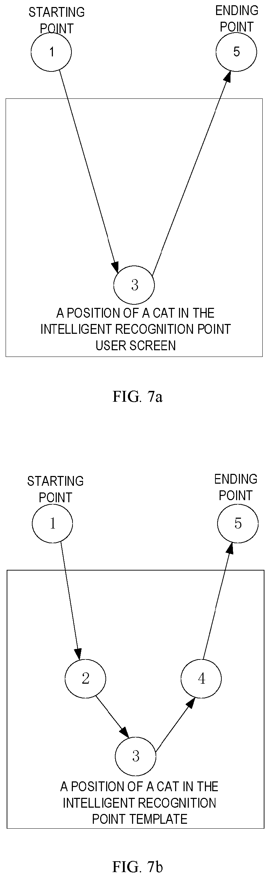

In one embodiment of the present disclosure, if the number of specified key frames at the display position is set to 1, only positions of the key frame "starting point", "position setting point", and "ending point" in the screen need to be retained, and the second multimedia material in each key frame may move uniformly between each key frame. As shown in FIG. 7a. If the number of key frames which has set the intelligent effect is larger than 1, the screen position information of all key frames needs to be retained, as shown in FIG. 7b below.

In one embodiment of the present disclosure, as shown in FIG. 7a, in the case that a plurality of key frames are included, only one specified key frame is included. The display position of the second multimedia material in the specified key frame is determined based on the identified position of the target object in the third multimedia material, and the display positions of other key frames may be self-set. For example, as shown in FIG. 7a, the second multimedia material is displayed in the specified key frame at "a position of a cat in the intelligent recognition point user screen". During the video playback process, the second multimedia material is moved uniformly from the starting position to "a position of the cat in the intelligent recognition point user screen", and then moved uniformly to the position where the "ending point" is located. Both the "starting point" and the "ending point" are positions outside the video screen.

In one embodiment of the present disclosure, as shown in FIG. 7b, in the case that a plurality of key frames are included, only three specified key frames are included. The display position of the second multimedia material in the specified key frame is determined by the identified position of the target object in the third multimedia material. For example, as shown in FIG. 7b, the display positions of the second multimedia material in the specified key frame are the positions where the numbers 2, 3, and 4 are located. During video playback, the second multimedia material is moved uniformly from the starting position to the position where the number 2 is located, then to the position where the number 3 is located, then to the position where the number 4 is located, and then to the position where the "ending point" is located. Both the "starting point" and the "ending point" are positions outside the video screen.

In embodiments of the present disclosure, after the target object selects the head, the preview region screen is automatically switched to the video background of the "person", and the position of the second multimedia material is displayed in the preview region. The second multimedia material is automatically positioned in the center of the "head" in the video background. In embodiments of the present disclosure, after the first target object selects the dog, the preview region screen is automatically switched to the video background of the "dog", and the second multimedia material is automatically positioned in the center of the "dog" in the video background. Furthermore, a duration of a playback progress bar in the preview region is consistent with a duration of the current picture-in-picture material.

In embodiments of the present disclosure, in FIG. 7, in accordance with a determination that the setting of the display effect of the second multimedia material is complete, the template editing page shown in FIG. 3 is entered, where the next second multimedia material that needs to set the display effect is selected.

In one embodiment of the present disclosure, the setting operation for the editing template further comprises an edit information copy operation, the edit information copy operation is used for indicating that the second edit information corresponding to the second multimedia material is copied to at least one or more fourth multimedia materials, so that the at least one or more fourth multimedia materials have the same edit information as the second multimedia material.

In embodiments of the present disclosure, if a display effect has been added to the second multimedia material, a list of display effects are displayed, and the identifications of the display effects include the first display effect and the second display effect. The added display effect may be deleted or duplicated to a further second multimedia material. The fourth multimedia material may be a multimedia material, except for the second multimedia material, included in the first multimedia data whose effect may be set.

In the embodiments of the present disclosure, the setting intelligent effect page is entered, where the original video background of the template is presented by default. Click on the entry (a trigger operation for adding a control to the video) may pull up the switching list, select different video backgrounds, and the duration of the example video needs to be aligned with the original video by looping. If the second multimedia material does not add an intelligent effect, the switching entry will not be displayed, only "My Video" will be displayed, where "My Video" displays the main video in the first multimedia data, also known as the background video. When switching to a character video, the main video of the original template is replaced with a built-in character video. When switching to a cat video, the main video of the original template is replaced with a built-in pet cat video. When switching to a dog video, the main video of the original template is replaced with a built-in pet dog video.

In embodiments of the present disclosure, a button is clicked and the settings parameters are saved, the page for setting intelligent effects is closed and the template editing page is returned to.

In embodiments of the present disclosure, each example video will prepare two videos (one is landscape and the other one is portrait). During the switching, an example video with a corresponding display ratio is selected based on whether the template is landscape or portrait.

The automatic playback logic is that after switching the video, the preview region needs to automatically play the timeline content corresponding to the currently selected Picture-in-Picture Material once.

In embodiments of the present disclosure, the second multimedia data may be template draft data obtained by adjusting the first multimedia data. In another embodiment, the second multimedia data may be template draft data obtained by adjusting the first multimedia data in response to video data generated for the template draft data.

The present disclosure relates to a method, apparatus, device, storage media, and program product for processing multimedia resources. The method includes: obtaining a first multimedia data; wherein the first multimedia data comprises a first multimedia material, a second multimedia material, and first edit information; the first edit information is at least used to indicate a first editing track segment formed based on the first multimedia material and a second editing track segment formed based on the second multimedia material according to an initial display position, and the first editing track segment overlaps with the second editing track segment in positions on a timeline of the video editing track; in response to a setting operation for an editing template, generating editing template data by processing the first multimedia data; and wherein the setting operation at least comprises a first operation and a second operation; the first operation is used for indicating that the first multimedia material is set as a replaceable material; the second operation is used for indicating that a display position of the second multimedia material is set to be determined based on an identified position of the target object; the editing template data is used to generate second multimedia data based on a third multimedia material; wherein the third multimedia material is used to replace the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to a target display position, the target display position is determined based on the identified position of the target object in the third multimedia material, the third editing track segment corresponds to the first editing track segment, and the fourth editing track segment corresponds to the second editing track segment. Embodiments of the present disclosure adjust the first multimedia data in response to the setting operation for the editing template, set the display effect for the second multimedia material in the first multimedia data, add the intelligent effect setting for the material in the editing template, and improve the universality of the template.

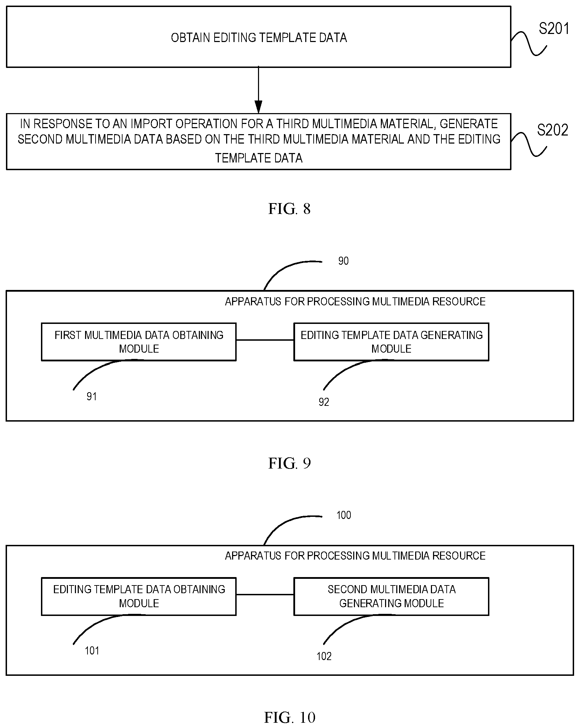

FIG 8 is a flowchart of a method for processing multimedia resources according to embodiments of the present disclosure. The embodiments are applicable to the case where the video template is used for editing a video. The method may be performed by an apparatus for processing multimedia resources. The apparatus for processing multimedia resources may be implemented in software and/or hardware, and the method for processing multimedia resources may be implemented by an electronic device of FIG. 1.

As shown in FIG. 8, embodiments of the present disclosure provide a method for processing multimedia resources which comprises steps S201-S202.

S201, obtaining editing template data; wherein the editing template data is generated by processing the first multimedia data in response to a setting operation for the editing template; the first multimedia data comprises first multimedia material, second multimedia material, and first edit information; the first edit information is at least used to indicate a first editing track segment formed based on the first multimedia material and a second editing track segment formed based on the second multimedia material according to an initial display position, the first editing track segment and the second editing track segment overlap in positions on a timeline of the video editing track; the setting operation at least comprises a first operation and a second operation; the first operation is used for indicating that the first multimedia material is set as a replaceable material; the second operation is used for indicating that a display position of the second multimedia material is set to be determined based on an identified position of the target object.

In one embodiment of the present disclosure, the editing template data includes editing template data generated in the above-described embodiment. The description of the editing template data may refer to the above-described embodiments, which is not detailed here in the embodiments of the present disclosure.

In one embodiment of the present disclosure, the editing template data is a template data publicly released by a producer of the editing template data. The obtaining of the editing template data includes: obtaining publicly editing template data from a public platform by a user, and importing the editing template data into the video editor.

S202, in response to an import operation for a third multimedia material, generating second multimedia data based on the third multimedia material and the editing template data. The third multimedia material is used for replacing the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to the target display position, the target display position is determined based on the identified position of the target object in the third multimedia material, the third editing track segment corresponds to the first editing track segment, and the fourth editing track segment corresponds to the second editing track segment.

In one embodiment of the present disclosure, the third multimedia material is imported by the user, for which an editing operation is to be performed.

In one embodiment of the present disclosure, the second editing track segment is a segment formed by performing key frame animation processing on the second multimedia material based on the initial display position at the specified key frame; the second operation is used for indicating to set the display position of the second media material at the specified key frame to be determined based on the identified position of the target object; and the fourth editing track segment is a segment formed by performing key frame animation processing on the second multimedia material based on the target display position at a specified key frame.

In one embodiment of the present disclosure, the identified position of the target object in the specified key in the third multimedia material is identified, and the identified position of the target object is set to the position of the second multimedia material in the first editing track segment. As shown in FIG. 7a, the second multimedia material in the specified key frame is displayed at the position where the number 3 is located. In the fourth editing track segment, the second multimedia material is moved uniformly from the starting position to the position where the number 3 is located, and then moved uniformly to the position where the "ending point" is located. The "starting point" and "ending point" are both positions outside the video display screen.

In one embodiment of the present disclosure, specifically, the second operation is used for indicating that the display position of the second multimedia material is set to be the identified position of the target object, and the target display position is the identified position of the target object in the third multimedia material.

In one embodiment of the present disclosure, the position of the target object in the third multimedia material is identified, and the identified position is used as the display position of the second multimedia material. Specifically, taking "crown" as an example of the second multimedia material, the "crown" is displayed at the position where the "cat" is located in the third multimedia material. As the position of the "cat" in the third multimedia material is moving constantly, the "crown" moves along with the position of the "cat".

FIG 9 is a schematic structural embodiment of the present disclosure apparatus for processing multimedia resources. The present embodiment is applicable to the case of generating a video template. The apparatus for processing multimedia resources may be implemented in software and/or hardware, and the apparatus for processing multimedia resources may be configured in the electronic device in FIG. 1.

As shown in FIG. 9, the apparatus for processing multimedia resources 90 provided by embodiments of the present disclosure includes: a first multimedia data obtaining module 91 and an editing template data generating module 92.

The first multimedia data obtaining module 91 is configured for obtaining a first multimedia data; wherein the first multimedia data comprises a first multimedia material, a second multimedia material, and first edit information; the first edit information is at least used to indicate a first editing track segment formed based on the first multimedia material and a second editing track segment formed based on the second multimedia material according to an initial display position, and the first editing track segment overlaps with the second editing track segment in positions on a timeline of the video editing track. The editing template data generating module 92 is configured for in response to a setting operation for an editing template, generating editing template data by processing the first multimedia data; wherein the setting operation at least comprises a first operation and a second operation; the first operation is used for indicating that the first multimedia material is set as a replaceable material; the second operation is used for indicating that a display position of the second multimedia material is set to be determined based on an identified position of the target object; the editing template data is used to generate second multimedia data based on a third multimedia material; wherein the third multimedia material is used to replace the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to a target display position, the target display position is determined based on the identified position of the target object in the third multimedia material, the third editing track segment corresponds to the first editing track segment, and the fourth editing track segment corresponds to the second editing track segment.

In one embodiment of the present disclosure, the second editing track segment is a segment formed by performing key frame animation processing on the second multimedia material based on the initial display position at a specified key frame; the second operation is used for indicating to set the display position of the second media material at the specified key frame to be determined based on the identified position of the target object; and the fourth editing track segment is a segment formed by performing key frame animation processing on the second multimedia material based on the target display position at the specified key frame.

In one embodiment of the present disclosure, the second editing track segment is a segment formed by performing key frame animation processing on the second multimedia material based on a first display position at a plurality of key frames, wherein the plurality of key frames comprise a specified key frame and a further key frame, and the first display position at the specified key frame is the initial display position; the second operation is used to indicate that the specified key frame is selected from the plurality of key frames and the display position of the second media material at the specified key frame is set to be determined based on the identified position of the target object; and the fourth editing track segment is a segment formed by performing key frame animation processing on the second multimedia material based on a second display position at the plurality of key frames, wherein the second display position at the specified key frame is the target display position, and the second display position at the further key frame is the first display position at the further key frame.

In one embodiment of the present disclosure, the second operation is used for indicating that a first mode is selected for processing the second media material, wherein the first mode indicates that the key frame animation processing is performed on the second multimedia material.

In one embodiment of the present disclosure, the second operation is used for indicating that a display position of the second multimedia material is to be determined based on an identified position of the target object; and the target display position is the identified position of the target object in the third multimedia material.

In one embodiment of the present disclosure, the second operation is used for indicating that a second mode is selected for processing the second media material, wherein the second mode is a mode indicating that the display position of the second multimedia material is set to be the identified position of the target object in the third multimedia material.

In one embodiment of the present disclosure, the second operation is used for indicating that a target object is selected from a plurality of initial objects and a display position of the second media material in the specified key frame is set based on the identified position of the target object determined.

In one embodiment of the present disclosure, the setting operation for the editing template further comprises an edit information copy operation, the edit information copy operation is used for indicating that the second edit information corresponding to the second multimedia material is copied to at least one or more fourth multimedia materials, so that the at least one or more fourth multimedia materials have the same edit information as the second multimedia material.

Embodiments of the present disclosure provides an apparatus for processing multimedia resources, which may perform the steps of the method for processing multimedia resources provided in embodiments of the present disclosure. Concrete steps and beneficial effects are not repeated herein.

FIG. 10 is a schematic structural diagram of an apparatus for processing multimedia resources provided in embodiments of the present disclosure. The present embodiment is applicable to the case of generating a video template. The apparatus for processing multimedia resources may be implemented in software and/or hardware, and the apparatus for processing multimedia resources may be configured in the electronic device in FIG. 1.

As shown in FIG. 10, embodiments of the present disclosure provides an apparatus for processing multimedia resources comprising: an editing template data obtaining module 101 and a second multimedia data generating module 102.

The editing template data obtaining module 101 is configured for obtaining editing template data; wherein the editing template data is generated by processing the first multimedia data in response to a setting operation for the editing template; the first multimedia data comprises first multimedia material, second multimedia material, and first edit information; the first edit information is at least used to indicate a first editing track segment formed based on the first multimedia material and a second editing track segment formed based on the second multimedia material according to an initial display position, the first editing track segment and the second editing track segment overlap in positions on a timeline of the video editing track; the setting operation at least comprises a first operation and a second operation; the first operation is used for indicating that the first multimedia material is set as a replaceable material; the second operation is used for indicating that a display position of the second multimedia material is set to be determined based on an identified position of the target object. The second multimedia data generating module is configured for in response to an import operation for a third multimedia material, generating second multimedia data based on the third multimedia material and the editing template data; wherein the third multimedia material is used for replacing the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to the target display position, the target display position is determined based on the identified position of the target object in the third multimedia material, the third editing track segment corresponds to the first editing track segment, and the fourth editing track segment corresponds to the second editing track segment.

In one embodiment of the present disclosure, the second editing track segment is a segment formed by performing key frame animation processing on the second multimedia material based on the initial display position at the specified key frame; the second operation is used for indicating to set the display position of the second media material at the specified key frame to be determined based on the identified position of the target object; and the fourth editing track segment is a segment formed by performing key frame animation processing on the second multimedia material based on the target display position at a specified key frame.

In one embodiment of the present disclosure, the second operation is used for indicating that a display position of the second multimedia material is to be determined based on an identified position of the target object; the target display position is the identified position of the target object in the third multimedia material.

Embodiments of the present disclosure provides an apparatus for processing multimedia resources, which may perform the steps of the method for processing multimedia resources provided in embodiments of the present disclosure. Concrete steps and beneficial effects are not repeated herein.

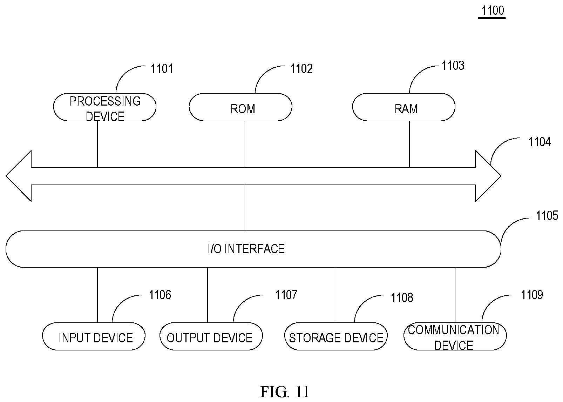

FIG. 11 is a schematic diagram of the structure of an electronic device in the embodiments of the present disclosure. Referring specifically to FIG. 11, it shows a schematic diagram of the structure of the electronic device 1100 suitable for implementing the embodiments of the present disclosure. The electronic device 1100 in the embodiments of the present disclosure may include but is not limited to mobile terminals such as mobile phones, laptops, digital broadcast receivers, PDAs (personal digital assistants), PADs (tablet computers), PMPs (portable multimedia players), car-mounted terminals (such as car navigation terminals), wearable terminal devices, and fixed terminals such as digital TVs, desktop computers, and smart home devices. The electronic device shown in FIG. 11 is only an example and should not bring any limitations to the functions and scope of use of the embodiments of the present disclosure.

As shown in FIG. 11, the electronic device 1100 may include a processing device (such as a Central Processor, graphics processing unit, etc.) 1101, which may perform various appropriate actions and processes according to the program stored in the read-only memory (ROM) 1102 or loaded from the storage device 1108 into the random access memory (RAM) 1103 to implement the method for processing multimedia resources as described in this disclosure. In the RAM 1103, various programs and data required for the operation of the terminal device 1100 are also stored. The processing device 1101, ROM 1102, and RAM 1103 are connected to each other through the bus 1104. The input/output (I/O) interface 1105 is also connected to the bus 1104.

Typically, the following devices may be connected to the I/O interface 1105: an input device 1106 including, for example, a touchscreen, touchpad, keyboard, mouse, camera, microphone, accelerometer, gyroscope, etc.; an output device 1107 including, for example, a liquid crystal display (LCD), speaker, vibrator, etc.; a storage device 1108 including, for example, magnetic tape, hard disk, etc.; and a communication device 1109. The communication device 1109 may allow the terminal device 1100 to communicate wirelessly or wirelessly with other devices to exchange data. Although FIG. 11 shows an terminal device 1100 having various devices, it should be understood that it is not required to implement or have all of the devices shown. More or fewer devices may alternatively be implemented or have.

In particular, according to embodiments of the present disclosure, the process described above with reference to the flowchart may be implemented as a computer software program. For example, embodiments of the present disclosure include a computer program product that includes a computer program carried on a non-transitory computer-readable medium, the computer program containing program code for performing the method shown in the flowchart, thereby implementing the method for processing multimedia resources as described above. In such embodiments, the computer program may be downloaded and installed from the network through the communication device 1109, or installed from the storage device 1108, or installed from the ROM 1102. When the computer program is executed by the processing device 1101, the above functions defined in the methods of the embodiments of the present disclosure are performed.

It should be noted that the computer-readable medium described above may be a computer-readable signal medium, a computer-readable storage medium, or any combination thereof. The computer-readable storage medium may be, but is not limited to, an electrical, magnetic, optical, electromagnetic, infrared, or semiconductor system, device, or any combination thereof. More specific examples of computer-readable storage media may include but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium containing or storing a program that may be used by an instruction execution system, device, or device, or in combination therewith. In the present disclosure, a computer-readable signal medium may be included in a baseband or a data signal propagated as part of a carrier wave, which carries computer-readable program codes. The propagated data signal may take various forms, including but not limited to electromagnetic signals, optical signals, or any suitable combination thereof. The computer-readable signal medium may also be any computer-readable medium other than a computer-readable storage medium, which may send, propagate, or transmit programs for use by or in combination with instruction execution systems, devices, or devices. The program codes contained on the computer-readable medium may be transmitted using any suitable medium, including but not limited to, wires, optical cables, RF (radio frequency), etc., or any suitable combination thereof.

In some implementation methods, clients and servers may communicate using any currently known or future developed network protocol such as HTTP (HyperText Transfer Protocol), and may interconnect with any form or medium of digital data communication (such as communication networks). Examples of communication networks include local area networks ("LANs"), wide area networks ("WANs"), the Internet (such as the Internet), and end-to-end networks (such as ad hoc end-to-end networks), as well as any currently known or future developed networks.

The above-described computer-readable medium may be contained in the above-described electronic device; or it may exist alone and not be assembled into the electronic device.

The computer-readable medium carries one or more programs, which, when executed by the terminal device, cause the terminal device to obtain a first multimedia data; wherein the first multimedia data comprises a first multimedia material, a second multimedia material, and first edit information; the first edit information is at least used to indicate a first editing track segment formed based on the first multimedia material and a second editing track segment formed based on the second multimedia material according to an initial display position, and the first editing track segment overlaps with the second editing track segment in positions on a timeline of the video editing track; in response to a setting operation for an editing template, generate editing template data by processing the first multimedia data; and wherein the setting operation at least comprises a first operation and a second operation; the first operation is used for indicating that the first multimedia material is set as a replaceable material; the second operation is used for indicating that a display position of the second multimedia material is set to be determined based on an identified position of the target object; the editing template data is used to generate second multimedia data based on a third multimedia material; wherein the third multimedia material is used to replace the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to a target display position, the target display position is determined based on the identified position of the target object in the third multimedia material, the third editing track segment corresponds to the first editing track segment, and the fourth editing track segment corresponds to the second editing track segment.

Alternatively, when the one or more programs are executed by the terminal device, the terminal device may also perform other steps described in above embodiments.

The computer-readable medium carries one or more programs that, when executed by the terminal device, cause the terminal device to: obtain editing template data; wherein the editing template data is generated by processing the first multimedia data in response to a setting operation for the editing template; the first multimedia data comprises first multimedia material, second multimedia material, and first edit information; the first edit information is at least used to indicate a first editing track segment formed based on the first multimedia material and a second editing track segment formed based on the second multimedia material according to an initial display position, the first editing track segment and the second editing track segment overlap in positions on a timeline of the video editing track; the setting operation at least comprises a first operation and a second operation; the first operation is used for indicating that the first multimedia material is set as a replaceable material; the second operation is used for indicating that a display position of the second multimedia material is set to be determined based on an identified position of the target object; and in response to an import operation for a third multimedia material, generate second multimedia data based on the third multimedia material and the editing template data; wherein the third multimedia material is used for replacing the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to the target display position, the target display position is determined based on the identified position of the target object in the third multimedia material, the third editing track segment corresponds to the first editing track segment, and the fourth editing track segment corresponds to the second editing track segment.

Alternatively, when the one or more programs are executed by the terminal device, the terminal device may also perform other steps described in above embodiments.

Computer program code for performing the operations of the present disclosure may be written in one or more programming languages, or combinations thereof, including but not limited to Object Oriented programming languages such as Java, Smalltalk, C++, and also including conventional procedural programming languages such as "C" or similar programming languages. The program code may be executed entirely on the user's computer, partially on the user's computer, as a standalone software package, partially on the user's computer, partially on a remote computer, or entirely on a remote computer or server. In the case of a remote computer, the remote computer may be connected to the user's computer through any type of network, including a local area network (LAN) or a wide area network (WAN), or may be connected to an external computer (e.g., using an Internet service provider to connect over the Internet).

The flowcharts and block diagrams in the accompanying drawings illustrate the architecture, functions, and operations of the systems, methods, and computer program products that may be implemented in accordance with various embodiments of the present disclosure. In this regard, each block in the flowcharts or block diagrams may represent a module, program segment, or portion of code that contains one or more executable instructions for implementing the specified logical functions. It should also be noted that in some alternative implementations, the functions marked in the blocks may also occur in a different order than those marked in the figures. For example, two consecutive blocks may actually be executed in substantially parallel, and they may sometimes be executed in the opposite order, depending on the functions involved. It should also be noted that each block in the block diagrams and/or flowcharts, as well as combinations of blocks in the block diagrams and/or flowcharts, may be implemented using a dedicated hardware-based system that performs the specified functions or operations, or may be implemented using a combination of dedicated hardware and computer instructions.

The units described in the embodiments of the present disclosure may be implemented by software or hardware. The names of the units do not limit the units per se in some cases.

The functions described above in this article may be at least partially performed by one or more hardware logic components. For example, without limitation, exemplary types of hardware logic components that may be used include: field programmable gate arrays (FPGAs), application specific integrated circuits (ASICs), application specific standard products (ASSPs), system-on-chip (SOCs), complex programmable logic devices (CPLDs), and so on.

In the context of this disclosure, a machine-readable medium may be a tangible medium that may contain or store programs for use by or in conjunction with an instruction execution system, device, or device. A machine-readable medium may be a machine-readable signal medium or a machine-readable storage medium. Machine-readable media may include, but are not limited to, electronic, magnetic, optical, electromagnetic, infrared, or semiconductor systems, devices, or devices, or any suitable combination thereof. More specific examples of machine-readable storage media may include electrical connections based on one or more wires, portable computer disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination thereof.

According to one or more embodiments of the present disclosure, the present disclosure provides a method for processing multimedia resources, comprising: obtaining a first multimedia data; wherein the first multimedia data comprises a first multimedia material, a second multimedia material, and first edit information; the first edit information is at least used to indicate a first editing track segment formed based on the first multimedia material and a second editing track segment formed based on the second multimedia material according to an initial display position, and the first editing track segment overlaps with the second editing track segment in positions on a timeline of the video editing track; in response to a setting operation for an editing template, generating editing template data by processing the first multimedia data; and wherein the setting operation at least comprises a first operation and a second operation; the first operation is used for indicating that the first multimedia material is set as a replaceable material; the second operation is used for indicating that a display position of the second multimedia material is set to be determined based on an identified position of the target object; the editing template data is used to generate second multimedia data based on a third multimedia material; wherein the third multimedia material is used to replace the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to a target display position, the target display position is determined based on the identified position of the target object in the third multimedia material, the third editing track segment corresponds to the first editing track segment, and the fourth editing track segment corresponds to the second editing track segment.

According to one or more embodiments of the present disclosure, the present disclosure provides a method for processing multimedia resources, comprising: obtaining editing template data; wherein the editing template data is generated by processing the first multimedia data in response to a setting operation for the editing template; the first multimedia data comprises first multimedia material, second multimedia material, and first edit information; the first edit information is at least used to indicate a first editing track segment formed based on the first multimedia material and a second editing track segment formed based on the second multimedia material according to an initial display position, the first editing track segment and the second editing track segment overlap in positions on a timeline of the video editing track; the setting operation at least comprises a first operation and a second operation; the first operation is used for indicating that the first multimedia material is set as a replaceable material; the second operation is used for indicating that a display position of the second multimedia material is set to be determined based on an identified position of the target object; and in response to an import operation for a third multimedia material, generating second multimedia data based on the third multimedia material and the editing template data; wherein the third multimedia material is used for replacing the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to the target display position, the target display position is determined based on the identified position of the target object in the third multimedia material, the third editing track segment corresponds to the first editing track segment, and the fourth editing track segment corresponds to the second editing track segment.

According to one or more embodiments of the present disclosure, the present disclosure provides an apparatus for processing multimedia resources, comprising: a first multimedia data obtaining module configured for obtaining a first multimedia data; wherein the first multimedia data comprises a first multimedia material, a second multimedia material, and first edit information; the first edit information is at least used to indicate a first editing track segment formed based on the first multimedia material and a second editing track segment formed based on the second multimedia material according to an initial display position, and the first editing track segment overlaps with the second editing track segment in positions on a timeline of the video editing track; and an editing template data generating module configured for in response to a setting operation for an editing template, generating editing template data by processing the first multimedia data; wherein the setting operation at least comprises a first operation and a second operation; the first operation is used for indicating that the first multimedia material is set as a replaceable material; the second operation is used for indicating that a display position of the second multimedia material is set to be determined based on an identified position of the target object; the editing template data is used to generate second multimedia data based on a third multimedia material; wherein the third multimedia material is used to replace the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to a target display position, the target display position is determined based on the identified position of the target object in the third multimedia material, the third editing track segment corresponds to the first editing track segment, and the fourth editing track segment corresponds to the second editing track segment.

According to one or more embodiments of the present disclosure, the present disclosure provides an apparatus for processing multimedia resources, comprising: an editing template data obtaining module configured for obtaining editing template data; wherein the editing template data is generated by processing the first multimedia data in response to a setting operation for the editing template; the first multimedia data comprises first multimedia material, second multimedia material, and first edit information; the first edit information is at least used to indicate a first editing track segment formed based on the first multimedia material and a second editing track segment formed based on the second multimedia material according to an initial display position, the first editing track segment and the second editing track segment overlap in positions on a timeline of the video editing track; the setting operation at least comprises a first operation and a second operation; the first operation is used for indicating that the first multimedia material is set as a replaceable material; the second operation is used for indicating that a display position of the second multimedia material is set to be determined based on an identified position of the target object; and a second multimedia data generating module configured for in response to an import operation for a third multimedia material, generating second multimedia data based on the third multimedia material and the editing template data; wherein the third multimedia material is used for replacing the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to the target display position, the target display position is determined based on the identified position of the target object in the third multimedia material, the third editing track segment corresponds to the first editing track segment, and the fourth editing track segment corresponds to the second editing track segment.

According to one or more embodiments of the present disclosure, the present disclosure provides an electronic device, the electronic device comprising:
one or more processors; and
a storage device for storing one or more programs;
the one or more programs, when executed by the one or more processors, causing the one or more processors to implement a method for processing multimedia resource as described in the first aspect or the second aspect.

According to one or more embodiments of the present disclosure, the present disclosure provides a computer-readable storage medium having a computer program stored thereon, the program, when executed by a processor, implementing any method for processing multimedia resource as described in the present disclosure.

According to one or more embodiments of the present disclosure, the present disclosure provides a computer program product comprising a computer program or instructions, the computer program or instructions, when executed by a processor, implementing the method for processing multimedia resource as described above.

The above description is only the preferred embodiment of the present disclosure and the explanation of the technical principles used. Those skilled in the art should understand that the scope of the disclosure involved in the present disclosure is not limited to the technical solutions formed by specific combinations of the above technical features, but should also cover other technical solutions formed by any combination of the above technical features or their equivalent features without departing from the above disclosure concept. For example, the technical solutions formed by replacing the above features with (but not limited to) technical features with similar functions disclosed in the present disclosure.

In addition, although various operations are depicted in a specific order, this should not be understood as requiring these operations to be performed in the specific order shown or in sequential order. In certain environments, multitasking and parallel processing may be advantageous. Similarly, although several specific implementation details are included in the above discussion, these should not be construed as limiting the scope of the present disclosure. Certain features described in the context of separate embodiments may also be implemented in combination in a single embodiment. Conversely, various features described in the context of a single embodiment may also be implemented separately or in any suitable sub-combination in multiple embodiments.

Although the subject matter has been described in language specific to structural features and/or methodological logical acts, it should be understood that the subject matter defined in the appended claims is not necessarily limited to the particular features or acts described above. Rather, the particular features and acts described above are merely exemplary forms of implementation of the claims.

## Claims

1. A method for processing multimedia resource, comprising:
obtaining a first multimedia data; wherein the first multimedia data comprises a first multimedia material, a second multimedia material, and first edit information; the first edit information is at least used to indicate a first editing track segment formed based on the first multimedia material and a second editing track segment formed based on the second multimedia material according to an initial display position, and the first editing track segment overlaps with the second editing track segment in positions on a timeline of the video editing track;
in response to a setting operation for an editing template, generating editing template data by processing the first multimedia data; and
wherein the setting operation at least comprises a first operation and a second operation;
the first operation is used for indicating that the first multimedia material is set as a replaceable material;
the second operation is used for indicating that a display position of the second multimedia material is set to be determined based on an identified position of the target object;
the editing template data is used to generate second multimedia data based on a third multimedia material; wherein the third multimedia material is used to replace the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to a target display position, the target display position is determined based on the identified position of the target object in the third multimedia material, the third editing track segment corresponds to the first editing track segment, and the fourth editing track segment corresponds to the second editing track segment.

2. The method of claim 1, wherein
the second editing track segment is a segment formed by performing key frame animation processing on the second multimedia material based on the initial display position at a specified key frame;
the second operation is used for indicating to set the display position of the second media material at the specified key frame to be determined based on the identified position of the target object; and
the fourth editing track segment is a segment formed by performing key frame animation processing on the second multimedia material based on the target display position at the specified key frame.

3. The method of claim 2, wherein
the second editing track segment is a segment formed by performing key frame animation processing on the second multimedia material based on a first display position at a plurality of key frames, wherein the plurality of key frames comprise a specified key frame and a further key frame, and the first display position at the specified key frame is the initial display position;
the second operation is used to indicate that the specified key frame is selected from the plurality of key frames and the display position of the second media material at the specified key frame is set to be determined based on the identified position of the target object; and
the fourth editing track segment is a segment formed by performing key frame animation processing on the second multimedia material based on a second display position at the plurality of key frames, wherein the second display position at the specified key frame is the target display position, and the second display position at the further key frame is the first display position at the further key frame.

4. The method of claim 2, wherein the second operation is used for indicating that a first mode is selected for processing the second media material, wherein the first mode indicates that the key frame animation processing is performed on the second multimedia material.

5. The method of claim 1, wherein
the second operation is used for indicating that a display position of the second multimedia material is to be determined based on an identified position of the target object; and
the target display position is the identified position of the target object in the third multimedia material.

6. The method of claim 5, wherein the second operation is used for indicating that a second mode is selected for processing the second media material, wherein the second mode is a mode indicating that the display position of the second multimedia material is set to be the identified position of the target object in the third multimedia material.

7. The method of claim 1, wherein the second operation is used for indicating that a target object is selected from a plurality of initial objects and a display position of the second media material in the specified key frame is set based on the identified position of the target object determined.

8. The method of claim 1, wherein the setting operation for the editing template further comprises an edit information copy operation, the edit information copy operation is used for indicating that the second edit information corresponding to the second multimedia material is copied to at least one or more fourth multimedia materials, so that the at least one or more fourth multimedia materials have the same edit information as the second multimedia material.

9. A method for processing multimedia resource, comprising:
obtaining editing template data; wherein the editing template data is generated by processing the first multimedia data in response to a setting operation for the editing template; the first multimedia data comprises first multimedia material, second multimedia material, and first edit information; the first edit information is at least used to indicate a first editing track segment formed based on the first multimedia material and a second editing track segment formed based on the second multimedia material according to an initial display position, the first editing track segment and the second editing track segment overlap in positions on a timeline of the video editing track; the setting operation at least comprises a first operation and a second operation; the first operation is used for indicating that the first multimedia material is set as a replaceable material; the second operation is used for indicating that a display position of the second multimedia material is set to be determined based on an identified position of the target object; and
in response to an import operation for a third multimedia material, generating second multimedia data based on the third multimedia material and the editing template data;
wherein the third multimedia material is used for replacing the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to the target display position, the target display position is determined based on the identified position of the target object in the third multimedia material, the third editing track segment corresponds to the first editing track segment, and the fourth editing track segment corresponds to the second editing track segment.

10. The method of claim 9, wherein the second editing track segment is a segment formed by performing key frame animation processing on the second multimedia material based on the initial display position at the specified key frame;
the second operation is used for indicating to set the display position of the second media material at the specified key frame to be determined based on the identified position of the target object; and
the fourth editing track segment is a segment formed by performing key frame animation processing on the second multimedia material based on the target display position at a specified key frame.

11. The method of claim 9, wherein
the second operation is used for indicating that a display position of the second multimedia material is to be determined based on an identified position of the target object;
the target display position is the identified position of the target object in the third multimedia material.

12. An apparatus for processing multimedia resource, comprising:
a first multimedia data obtaining module configured for obtaining a first multimedia data; wherein the first multimedia data comprises a first multimedia material, a second multimedia material, and first edit information; the first edit information is at least used to indicate a first editing track segment formed based on the first multimedia material and a second editing track segment formed based on the second multimedia material according to an initial display position, and the first editing track segment overlaps with the second editing track segment in positions on a timeline of the video editing track; and
an editing template data generating module configured for in response to a setting operation for an editing template, generating editing template data by processing the first multimedia data;
wherein the setting operation at least comprises a first operation and a second operation;
the first operation is used for indicating that the first multimedia material is set as a replaceable material;
the second operation is used for indicating that a display position of the second multimedia material is set to be determined based on an identified position of the target object;
the editing template data is used to generate second multimedia data based on a third multimedia material; wherein the third multimedia material is used to replace the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to a target display position, the target display position is determined based on the identified position of the target object in the third multimedia material, the third editing track segment corresponds to the first editing track segment, and the fourth editing track segment corresponds to the second editing track segment.

13. An apparatus for processing multimedia resource, comprising:
an editing template data obtaining module configured for obtaining editing template data; wherein the editing template data is generated by processing the first multimedia data in response to a setting operation for the editing template; the first multimedia data comprises first multimedia material, second multimedia material, and first edit information; the first edit information is at least used to indicate a first editing track segment formed based on the first multimedia material and a second editing track segment formed based on the second multimedia material according to an initial display position, the first editing track segment and the second editing track segment overlap in positions on a timeline of the video editing track; the setting operation at least comprises a first operation and a second operation; the first operation is used for indicating that the first multimedia material is set as a replaceable material; the second operation is used for indicating that a display position of the second multimedia material is set to be determined based on an identified position of the target object; and
a second multimedia data generating module configured for in response to an import operation for a third multimedia material, generating second multimedia data based on the third multimedia material and the editing template data;
wherein the third multimedia material is used for replacing the first multimedia material; the second multimedia data comprises the third multimedia material, the second multimedia material, and the second edit information; the second edit information is at least used to indicate a third editing track segment formed based on the third multimedia material and a fourth editing track segment formed based on the second multimedia material according to the target display position, the target display position is determined based on the identified position of the target object in the third multimedia material, the third editing track segment corresponds to the first editing track segment, and the fourth editing track segment corresponds to the second editing track segment.

14. An electronic device, comprising:
one or more processors; and
a storage device for storing one or more programs;
the one or more programs, when executed by the one or more processors, causing the one or more processors to implement a method for processing multimedia resource of any of claims 1-11.

15. A computer-readable storage medium having a computer program stored thereon, the program, when executed by a processor, implementing a method for processing multimedia resource of any of claims 1-11.

16. A computer program product, the computer program product comprising a computer program or instructions, the computer program or instructions, when executed by a processor, implementing a method for processing multimedia resource of any of claims 1-11.
